# EUROPÄISCHE PATENTSCHRIFT

(11) **EP 0 800 323 B1**
(45) Veröffentlichungstag und Bekanntmachung des Hinweises auf die Patenterteilung: **03.05.2006**
(21) Anmeldenummer: 97102349.4
(22) Anmeldetag: 13.02.1997
(51) Int. Cl.: H04Q 11/04, H04N 1/333, H04L 5/14

(54) **Verfahren zur Fax-Übertragung in digitalen Netzen**
Method for fax-transmission in digital networks
Procédé pour la transmission de facsimilé dans des réseaux numériques

(30) Priorität: 21.02.1996 DE 19606479
(43) Veröffentlichungstag der Anmeldung: 08.10.1997
(73) Patentinhaber: Infineon Technologies AG, 81669 München (DE)
(72) Erfinder: Degenhardt, Achim, 82110 Germering (DE); Alger-Meunier, Michael, Dr., 85540 Haar (DE)
(74) Vertreter: Barth, Stephan Manuel

(56) Entgegenhaltungen:
- EP-A- 0 357 427
- WO-A-93/23809
- GERKE P R: "THE INTEGRATED SERVICES DIGITAL NETWORK (ISDN) AS A BASIS FOR COMBINED TELECOMMUNICATION" FROM ELECTRONICS TO MICROELECTRONICS (EUROCON) 4TH CONFERENCE 24-28 MARCH 1980, STUTTGART,24. März 1980 (1980-03-24), Seiten 233-236, XP002037606

## Beschreibung

Die Erfindung betrifft ein Verfahren zum Anschluss von mindestens drei Endgeräten an eine Leitung eines digitalen Netzes, wobei die übertragenen Sprachdaten gegebenenfalls komprimiert werden, mit den Merkmalen des Oberbegriffs von Anspruch 1 und wie auch aus der europäischen Patentanmeldung EP 0 357 427 A2 bekannt ist.

In dem Artikel "The integrated services digital network (ISDN) as a basis for combined telecommunication", 4^{th} Eurocon Conference, Stuttgart, 24. März 1980) von Peter R. Gerke beschreibt ein digitales Kommunikationsnetzwerk mit der Möglichkeit eine Datenkompression einer Sprachübertragung dynamisch zu reduzieren und eine Faxübertragung auf zwei Kanäle einer Leitung zu verteilen.

Ein im großen Umfang eingesetztes digitales Netz ist das ISDN-Netz (Integrated Services Digital Network). Die im ISDN verwendete Übertragungstechnik besteht darin, auf einer Kupferdoppelader zwei Sprachkanäle von einer Vermittlungsstelle zum Gebäude des Teilnehmers zu übertragen. Die beiden Sprachkanäle werden auch B-Kanäle genannt und verfügen über eine Übertragungskapazität von jeweils 64 Kbit/s. Neben den beiden B-Kanälen wird ein auch D-Kanal genannter Steuerkanal übertragen, der eine Übertragungskapazität von 16 Kbit/s aufweist. Die beiden im ISDN verfügbaren 64 Kbit/s B-Kanäle werden über einen entsprechenden Adapter in der Vermittlungsstelle an zwei Ports und beim Teilnehmer an zwei analoge Telefone angeschlossen. Jedem der beiden Teilnehmer steht ein 64 Kbit/s-Kanal und damit auch beim Anschluß von schnellen Faxgeräten eine bestmögliche Übertragungsgeschwindigkeit zur Verfügung. Der Netzbetreiber hat den Vorteil, daß keine zusätzliche Ader verlegt werden muß.

Es besteht auch die Möglichkeit, die Sprachdaten auf 32 Kbit/s zu komprimieren. Dann ist auf der ISDN-Leitung eine Übertragung von zwei analogen Teilnehmern pro Kanal und damit von insgesamt vier Teilnehmern über eine Anschlußleitung möglich. Eine Kompression auf 16 Kbit/s erlaubt einen Anschluß von acht Endgeräten. Zur Kompression und Dekompression werden bekannte Algorithmen, wie z.B. der ADPCM-Algorithmus entsprechend dem CCITT-Standard (Comité Consultatif International Telégraphique et Téléphonique) verwendet, ohne daß die Sprachqualität merkbar sinkt. Dabei leidet jedoch die Übertragung schneller Faxgeräte und Modems, so daß dem Teilnehmer nicht mehr der volle Service geboten wird. Bei der Verwendung schneller Faxgeräte simmuliert das Kompressionssystem nicht im vollen Umfang vier einzelne analoge Anschlußleitungen. Die folgenden Ausführungen im Zusammenhang mit Faxsignal-Übertragungen gelten im gleichen Maß für Modemsignal-Übertragungen.

Der Erfindung liegt die **Aufgabe** zugrunde, ein Verfahren der eingangs genannten Art zu schaffen, welches eine Fax-Übertragung über ein zusätzliches paralleles Modem ermöglicht.

Ein solches Verfahren ermöglicht die Übertragung einer Vielzahl von analogen Gesprächen mit einer für die menschliche Sprache ausreichenden Übertragungskapazität von 16, 24 oder 32 Kbit/s. Wird ein Fax-Signal erkannt, so wird dem Fax soviel Übertragungskapazität wie möglich zugewiesen, um eine möglichst schnelle Übertragung, im Idealfall mit 64 Kbit/s, zu erreichen. Dazu kann der Fax-Übertragung auch sämtliche noch nicht durch andere Gespräche belegte freie Übertragungskapazität zugewiesen werden.
Die Komprimierung und die Fax-Signalerkennung in Verbindung mit der davon gesteuerten Zuweisung der Übertragungskapazität können vorteilhafterweise in einem einzigen elektronischen Baustein integriert werden.

Bevorzugt wird dabei die Datenkompression dynamisch zurückgenommen. Im Beispiel der ISDN-Leitung werden pro Kanal 8 bit parallel übertragen und damit eine Übertragungskapazität von 64 Kbit/s erreicht. Bei einer Aufteilung auf vier Endgeräte stehen somit jedem Endgerät zunächst 4 bit bei Datenkompression zur Verfügung. Wird eines der Geräte als Fax-Gerät bzw. ein zur Übertragung anstehendes Signal als Fax-Signal erkannt, so kann einer Sprachübertragung beispielsweise 1 bit entzogen werden und dort die Kompression auf 3 bit erhöht werden und dieses zusätzliche bit dem Fax-Signal zugewiesen werden, so daß diesem 5 bit mit einer Übertragungskapazität von insgesamt 40 Kbit/s zur Verfügung stehen. Grundsätzlich kann eine bei allen Gesprächen gleiche Kompression angewendet werden. Es kann aber zweckmäßig sein, ein Sprachsignal zugunsten der Fax-Übertragung stärker zu komprimieren als die anderen Sprachsignale. Die Fax-Übertragung kann auch auf beide Kanäle der Leitung verteilt werden. Im eben genannten Beispiel könnte man also bei auf zwei Kanälen verteilten vier Endgeräten den drei normalen Gesprächen jeweils 1 bit entziehen, so daß dem Fax-Gerät insgesamt 7 bit und damit 56 Kbit/s zur Verfügung stehen.

Wenn während der Fax-Übertragung festgestellt wird, daß durch das Ende eines anderen Gesprächs zusätzliche Übertragungskapazität frei geworden ist, so wird in einer bevorzugten Weiterbildung der Erfindung diese freigewordene Kapazität ebenfalls der Fax-Übertragung zugewiesen.

Gemäß der Erfindung besteht die Möglichkeit, ein zusätzliches, paralleles Modem zu aktivieren. Eine solche Lösung ist insbesondere bei kontinuierlich und stark ausgelasteten Leitungen von Vorteil. Das Modem ist so lange ausgeschaltet, wie lediglich Sprachdaten übertragen werden. Nur bei Detektion einer Fax-Übertragung wird es eingeschaltet, so daß insgesamt wenig Energie verbraucht wird.

Die Fax-Erkennung wird bevorzugt durch Detektion eines 2,1 KHz-Tons durchgeführt. Dazu wird direkt im Prozessor des Kompressions-Controllers eine Funktion implementiert, welche aus einem schmalbandigen Bandpass mit einer Mittenfrequenz von 2,1 KHz und einem genau invers verlaufendem Notchfilter besteht. Der Vergleich von Energie im 2,1 KHz-Band mit der Energie außerhalb des Bandes ergibt die Detektion des Tones. Eine solche Erkennung muß für beide Richtungen vorgesehen werden. Sie erfordert neben einigen Logik-Gattern ca. 1 MIPS (Million Instructions Per Second) Rechenleistung pro Kanal und Richtung, also insgesamt 2 MIPS für richtungsgetrennte Erkennung, da hierzu zwei Algorithmen nötig sind. Bevorzugt wird jedoch in einem ersten Schritt festgestellt, ob ein Fax-Signal vorliegt und in einem zweiten Schritt festgestellt, ob es sich um ein- oder ausgehendes Faxsignal handelt. Der zweite Schritt kann dadurch realisiert werden, daß beide Richtungen gleichzeitig überprüft werden. Dadurch erreicht man eine Ersparnis von ca. 1 MIPS pro Kanal mit entsprechender Reduzierung des Stromverbrauchs. Der Algorithmus betrachtet zunächst die Summe der empfangenen Energien aus beiden Richtungen. Wird ein Ton erkannt, also im ersten Schritt festgestellt, daß überhaupt ein Fax-Signal vorliegt, so wird dann eine beliebige, aber bestimmte der beiden Richtungen von der Erkennung getrennt. Je nachdem, welche Richtung im zweiten Schritt weiterhin gemessen wird, wird der Ton weiterhin erkannt oder nicht. Daraus ergibt sich unmittelbar die Richtung des Faxsignals.

Die Erkennung des Tons dauert wegen der geforderten Zuverlässigkeit der Erkennung relativ lange. Dies kann bis zu 0,4 Sek. dauern, da der Ton eine gewisse Zeitdauer sicher erkannt werden muß. Nach Abtrennung oder Unterdrückung einer der beiden Richtungen kann jedoch sehr schnell auf die Richtung des Tones geschlossen werden, da ein Nachlaßen der Energie bei abgeschaltetem Ton nur von der Einschwingzeit der Filter bestimmt wird. Die Richtungserkennung dauert also nicht wesentlich länger als die Erkennung selbst. Der Fax-Erkennungston steht für mindestens ca. 0,5 Sek. zur Verfügung und kann innerhalb dieser Zeit sicher erkannt werden.

Nachfolgend wird die Erfindung anhand eines in der Zeichnung dargestellten Ausführungsbeispiels weiter erläutert. Im einzelnen zeigen die schematischen Darstellungen in:
- Fig. 1: ein Blockschaltbild von Teilnehmeranschlüssen an ein digitales Netz und
- Fig. 2: eine mögliche Aufteilung der vorhandenen Übertragungskapazitäten.

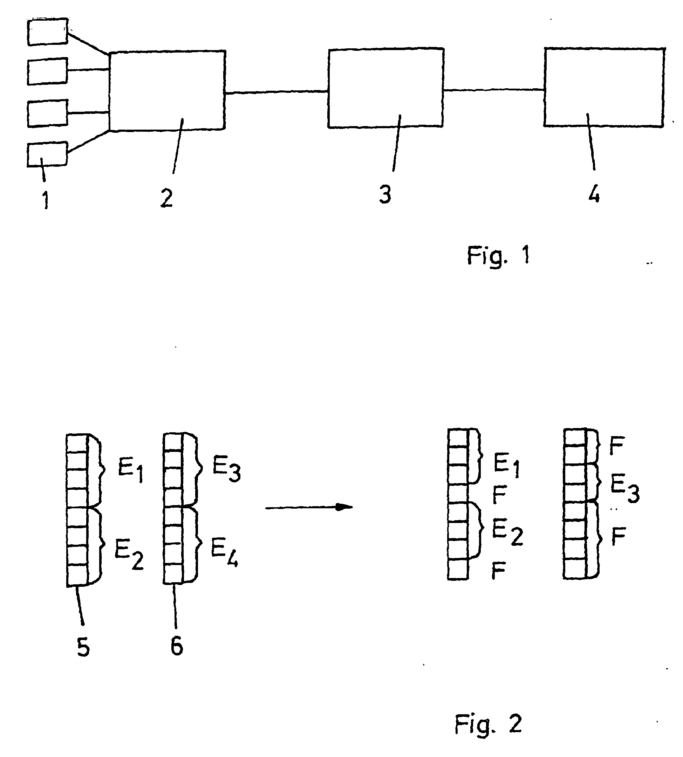

In Fig. 1 sind vier mit 1 bezeichnete a/b-Terminal-Adapter dargestellt, mit denen herkömmlich analog betriebene Geräte direkt an das ISDN angeschlossen werden. Der Terminal-Adapter übernimmt dabei die Umsetzung der analogen in digitale Signale und die Steuerung der Protokolle im D-Kanal. Der folgende mit 2 bezeichnete Baustein dient zur Steuerung dieses als PCM-4 bezeichneten Systems (PCM = Puls Code Modulation). Dahinter ist der Komprimierer 3 geschaltet, der die Sprachkompression durchführt. In diesem Komprimierer ist eine Fax-Erkennung integriert, die einerseits erkennen kann, ob ein Fax-Signal vorliegt und andererseits ebenfalls erkennt, in welche Richtung dieses gesendet wird. Die Erkennung wird ebenfalls zur Steuerung eines parallel zum Komprimierer 3 geschalteten Modems benutzt (nicht dargestellt). Die Übertragung über das parallel zum Komprimierer geschaltete Modem kann alternativ oder zusätzlich zur dynamischen Datenkompression erfolgen. Der Baustein 4 stellt den Übergang ins digitale Netz und insbesondere eine ISDN-U-Schnittstelle dar.

In Fig. 2 ist schematisch die Aufteilung der Signale von vier Endgeräten auf zwei Kanäle einer ISDN-Leitung dargestellt. Die mit 5 und 6 bezeichneten Kanäle weisen jeweils eine Breite von 8 bit auf, die als Kästchen dargestellt sind. Dabei hat jeder Kanal eine Übertragungskapazität von 64 Kbit/s. Bei Anschluß von 4 Endgeräten E1 bis E4 entfallen auf jedes 4 bit. Die Sprachdaten müssen auf 32 Kbit/s komprimiert werden. Stellt der Controller nun fest, daß eines der Endgeräte E1 bis E4 ein Fax F ist, so werden diesem zusätzliche Übertragungskapazitäten zugewiesen und die Sprachdaten der übrigen Endgeräte weiter komprimiert. Die in der Figur dargestellte Zuteilung der jeweils zuständigen Übertragungsbits ist willkürlich gewählt und wird in jedem Fall durch den als D-Kanal bezeichneten Steuerkanal protokolliert. Das Fax-Signal wird also im dargestellten Beispiel auch auf beide Kanäle 5 und 6 aufgeteilt. Zwei der drei Gespräche E1 und E2 sind auf 3 bit und damit 24 Kbit/s und eines E3 auf 2 bit und damit 16 Kbit/s komprimiert worden. Dadurch steht dem Fax die volle Übertragungskapazität von 64 Kbit/s zur Verfügung.

### Bezugszeichenliste

- 1 :: a/b-Terminal-Adapter
- 2 :: Baustein
- 3 :: Komprimierer
- 4 :: Baustein
- 5 :: Kanal
- 6 :: Kanal

## Patentansprüche

1. Verfahren zum Anschluss von mindestens drei Endgeräten (E1-E4, F) an eine Leitung eines digitalen Netzes, wobei übertragende Sprachdaten gegebenenfalls komprimiert werden,
wobei wann ein Fax-Signal erkannt wird, dem Fax (F) eine Übertragungskapazität für eine schnelle Fax-Übertragung zugewiesen wird,
**dadurch gekennzeichnet,**
**dass** ein zusätzliches paralleles Modem bei Detektion einer Fax-Übertragung aktiviert wird.

2. Verfahren nach Anspruch 1,
**dadurch gekennzeichnet,**
**dass** die Datenkompression dynamisch erhöht wird.

3. Verfahren nach einem der Ansprüche 1 oder 2,
**dadurch gekennzeichnet,**
**dass** die Fax-Übertragung auf zwei Kanäle (5, 6) in der Leitung verteilt wird.

4. Verfahren nach einem der vorhergehenden Ansprüche,
**dadurch gekennzeichnet,**
**dass** die Fax-Erkennung durch Detektion eines 2,1 KHz-Tons durchgeführt wird.

5. Verfahren nach Anspruch 4,
**dadurch gekennzeichnet,**
**dass** in einem Schritt festgestellt wird, ob ein Fax-Signal vorliegt und in einem zweiten Schritt festgestellt wird, ob es sich um ein ein- oder ausgehendes Fax handelt.

6. Verfahren nach Anspruch 5,
**dadurch gekennzeichnet,**
**dass** im zweiten Schritt nur eine definierte Richtung überprüft wird.

## Claims

1. Method for connection of at least three terminals (E1-E4, F) to a line of a digital network, transmitted voice data being compressed if necessary,
when a fax signal is recognized, the fax (F) is assigned a transmission capacity for a fast fax transmission,
**characterized**
**in that** on detection of a fax transmission an additional parallel modem is activated.

2. Method according to Claim 1,
**characterized**
**in that** the data compression is increased dynamically.

3. Method according to one of Claims 1 or 2,
**characterized**
**in that** the fax transmission is distributed between two channels (5, 6) in the line.

4. Method according to one of the preceding claims,
**characterized**
**in that** the fax identification is carried out by detection of a 2.1 kHz tone.

5. Method according to Claim 4,
**characterized**
**in that** one step is used to determine whether a fax signal is present, and a second step is used to determine whether this is an incoming or outgoing fax.

6. Method according to Claim 5,
**characterized**
**in that** only one defined direction is checked in a second step.

## Revendications

1. Procédé pour la connexion d'au moins trois terminaux (E1-E4, F) à une ligne d'un réseau numérique, les données vocales transmises étant, le cas échéant, comprimées,
une capacité de transmission étant attribuée au fax (F) pour une transmission fax rapide lorsqu'un signal de fax est reconnu,
**caractérisé en ce qu'**
un modem supplémentaire parallèle est activé lors de la détection d'une transmission fax.

2. Procédé selon la revendication 1,
**caractérisé en ce que**
la compression de données est augmentée de façon dynamique.

3. Procédé selon une des revendications 1 ou 2,
**caractérisé en ce que**
la transmission fax est répartie dans la ligne sur deux canaux (5, 6).

4. Procédé selon l'une quelconque des revendications précédentes,
**caractérisé en ce que**
la reconnaissance de fax est réalisée par la détection d'une tonalité de 2,1 Khz.

5. Procédé selon la revendication 4,
**caractérisé en ce que**
dans une étape, on détermine s'il y a un signal de fax et dans une deuxième étape, on détermine s'il s'agit d'un fax rentrant ou sortant.

6. Procédé selon la revendication 5,
**caractérisé en ce que**
dans la deuxième étape, seule une direction définie est contrôlée.
